# EUROPÄISCHE PATENTSCHRIFT

(11) **EP 2 553 226 B1**
(45) Veröffentlichungstag und Bekanntmachung des Hinweises auf die Patenterteilung: **20.01.2016**
(21) Anmeldenummer: 11710481.0
(22) Anmeldetag: 22.03.2011
(51) Int. Cl.: F01N 3/20

(54) **VERFAHREN ZUM BETRIEB EINER FÖRDEREINHEIT FÜR EIN REDUKTIONSMITTEL**
METHOD FOR OPERATING A DELIVERY UNIT FOR A REDUCING AGENT
PROCÉDÉ POUR FAIRE FONCTIONNER UNE UNITÉ D'ACHEMINEMENT POUR UN AGENT RÉDUCTEUR

(30) Priorität: 01.04.2010 DE 102010013695
(43) Veröffentlichungstag der Anmeldung: 06.02.2013
(73) Patentinhaber: Continental Automotive GmbH, 30165 Hannover (DE)
(72) Erfinder: BAUER, Peter, 95505 Immenreuth (DE); HODGSON, Jan, 53840 Troisdorf (DE)
(86) Internationale Anmeldenummer: PCT/EP2011/054311
(87) Internationale Veröffentlichungsnummer: WO 2011/120839

(56) Entgegenhaltungen:
- DE-A1- 19 913 477
- DE-A1-102004 016 554
- DE-A1-102004 053 124
- DE-A1-102005 002 318
- DE-A1-102006 012 855
- DE-A1-102006 059 625
- DE-A1-102007 017 458
- DE-A1-102007 017 459
- DE-A1-102008 030 756

## Beschreibung

Die Erfindung betrifft ein Verfahren zum Betrieb einer Fördereinheit für Reduktionsmittel. Eine hierfür geeignete Fördereinheit weist eine von einem Tank zu einer Zugabestelle (z. B. an einer Abgasleitung eines Kraftfahrzeuges) verlaufende Hinlaufleitung und eine von der Hinlaufleitung abzweigende Rücklaufleitung zurück in den Tank auf. Die Rücklaufleitung kann regelmäßig von einem mit einer elektrischen Spannung ansteuerbaren Ventil geöffnet und/oder verschlossen werden, so dass ein Fluss an Reduktionsmittel ausgehend von der Hinlaufleitung hin zur Rücklaufleitung gezielt unterbrochen bzw. verhindert oder hergestellt werden kann.

Derartige Fördereinheiten oder Dosiereinheiten können beispielsweise zusammen mit Vorrichtungen zur Reinigung der Abgase von Verbrennungskraftmaschinen eingesetzt werden. Insbesondere werden derartige Fördereinheiten bei Abgasbehandlungsvorrichtungen eingesetzt, die für die selektive katalytische Reduktion [SCR = selective catalytic reduction] geeignet sind. Mit der selektiven katalytischen Reduktion können Stickoxidverbindungen (NOₓ) im Abgas wirkungsvoll reduziert werden. Dazu wird dem Abgas ein Reduktionsmittel zugeführt. Als Reduktionsmittel kommt z. B. Ammoniak zum Einsatz. Ammoniak sollte insbesondere bei Abgasbehandlungsvorrichtungen für mobile Verbrennungskraftmaschinen aus Sicherheitsgründen nicht direkt bevorratet werden, sondern in Form eines Reduktionsmittelvorläufers. Ein derartiger Reduktionsmittelvorläufer ist beispielsweise 32,5 %-ige Harnstoff-Wasser-Lösung, die zu Ammoniak umgesetzt werden kann und beispielsweise unter dem Handelsnamen "*AdBlue*" erhältlich ist. Die Lagerung einer Harnstoff-Wasserlösung führt jedoch ebenfalls zu Problemen, weil diese bei Temperaturen unter -11 °C gefriert. Ein weiterer bekannter Reduktionsmittelvorläufer ist Denoxium, welches auch bei Temperaturen unterhalb von -11 °C noch flüssig bleibt. Gleichwohl besteht auch hier bei tieferen Temperaturen die gleiche Problematik. Wenn im Folgenden der Begriff "Reduktionsmittel" verwendet wird, sind damit insbesondere auch ein Reduktionsmittelvorläufer und/oder eine Reduktionsmittelvorläuferlösung gemeint.

Gerade bei Kraftfahrzeugen können im Betrieb Temperaturen unterhalb - 11 °C auftreten, z. B. wenn die Kraftfahrzeuge zwischen einzelnen Betriebsphasen lange Stillstandzeiten haben. Der Tank und die Fördereinheit für die Harnstoff-Wasser-Lösung müssen daher so ausgelegt sein, dass sie das Einfrieren von Reduktionsmittel in ihrem Inneren überstehen, ohne durch den auftretenden Eisdruck zerstört zu werden. Für die Fördereinheit ist daher vorteilhaft, wenn eine Rücklaufleitung vorgesehen ist. Diese Rücklaufleitung kann im Betrieb durch ein Ventil verschlossen werden. Beim Stillstand kann in der Fördereinheit auftretender Eisdruck durch die Rücklaufleitung abgebaut werden, wenn das Ventil dann geöffnet ist. Gleichzeitig ermöglicht eine verschließbare Rücklaufleitung den Abtransport von Luft und/oder Gasblasen und/oder Feststoffen (z. B. kleine Eisstücke) aus der Fördereinheit bzw. den zugeordneten Leitungen, die beim Einfrieren oder Auftauen des Reduktionsmittels im Inneren der Fördereinheit auftreten können. Damit die Fördereinheit an einer Zugabestelle zuverlässig (insbesondere nur flüssiges) Reduktionsmittel mit einer exakt vorgegebenen Menge bzw. einem exakt vorgegebenen Druck bereitstellen kann, ist es wichtig, dass in der Fördereinheit bzw. den zugeordneten Leitungen möglichst keine Luftblasen enthalten sind.

Die DE 10 2006 012 855 A1 offenbart ein Verfahren zur Dosierung eines fluiden, schadstoffreduzierenden Mediums in ein Kraftfahrzeug-Abgassystem. Dazu wird unter anderem ein pulsweitenmoduliertes Entlastungsventil vorgeschlagen.

In der DE 10 2004 016 554 A1 wird ein Verfahren zur Ansteuerung eines Magnetventils offenbart, wobei ein Magnetanker nach einer durch eine Anzugs-Spannung hervorgerufenen Hubbewegun mittels einer betragsmäßig kleineren Halte-Spannung in einer ausgelenkten Stellung gehalten wird. Beide Spannungen werden durch Pulsweiten-Modulation generiert.

Ferner wird in DE 10 2004 053124 ein Verfahren zum Steuern eines Öffnungsgrads eines Ventils offenbart.

In einem Kraftfahrzeug ist normalerweise nur begrenzt elektrische Energie verfügbar. Aus diesem Grund ist es vorteilhaft, wenn die Fördereinheit mit wenig Energie betrieben werden kann. Insbesondere das verschließbare Ventil in der Rücklaufleitung stellt einen Energieverbraucher dar. Damit beim Stillstand des Kraftfahrzeuges Eisdruck abgebaut werden kann, muss das Ventil geöffnet sein. Deshalb muss ein Ventil verwendet werden, das ohne anliegende Versorgungsspannung geöffnet ist. Im Umkehrschluss ist es für den Betrieb der Fördereinheit dann erforderlich, dass am Ventil eine Betriebsspannung anliegt und daher Energie verbraucht wird.

Es ist nun Aufgabe der hier vorliegenden Erfindung, die im Zusammenhang mit dem Stand der Technik geschilderten technischen Probleme weiter zu lindern. Es soll insbesondere ein Verfahren zum besonders energiesparenden Betrieb einer Fördereinheit, die ein elektrisch ansteuerbares Ventil aufweist, beschrieben werden.

Diese Aufgaben werden gelöst mit einer Vorrichtung gemäß den Merkmalen des Patentanspruchs 1. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft ein Verfahren zum Betrieb einer Fördereinheit für Reduktionsmittel, wobei die Fördereinheit eine von einem Tank zu einer Zugabestelle verlaufende Hinlaufleitung und eine von der Hinlaufleitung abzweigende Rücklaufleitung aufweist, wobei die Rücklaufleitung von einem mit einem elektrischen Strom ansteuerbaren Ventil umgeschaltet werden kann, und das Verfahren zumindest die folgenden Schritte aufweist:
a) Anlegen eines Aktivierungsstromes am Ventil für ein erstes Zeitintervall;
b) Anlegen eines Haltestromes am Ventil, wenn das erste Zeitintervall abgelaufen ist;
c) Ermitteln einer Betriebsgröße der Fördereinheit;
d) Anpassen zumindest einer der folgenden Größen in Abhängigkeit der ermittelten Betriebsgröße:
   - der Aktivierungsstrom;
   - der Haltestrom;
   - das erste Zeitintervall.

Dem erfindungsgemäßen Verfahren liegt die Überlegung zu Grunde, dass für das Beibehalten einer aktivierten Stellung des Ventils eine geringere Betriebsspannung erforderlich ist, als für den Übergang von einer Ausgangsstellung in die aktivierte Stellung des Ventils. In der Ausgangsstellung ist das Ventil jeweils entweder geöffnet oder geschlossen. In der aktivierten Stellung liegt dann jeweils der andere Zustand (geschlossen oder geöffnet) vor. Mit einer Umschaltung des Ventils im Sinne der Erfindung ist gemeint, dass das Ventil entweder von einem geschlossenen Zustand in einen geöffneten Zustand oder von einem geöffneten Zustand in einen geschlossenen Zustand überführt wird. Dies ist vom Bautyp des Ventils abhängig. Damit der Wechsel in die aktivierte Stellung sicher erfolgen kann, muss die hierzu erforderliche höhere Betriebsspannung (der Aktivierungsstrom) für einen bestimmten Zeitraum (den ersten Zeitraum) angelegt werden. Danach kann ein geringer Strom bzw. eine geringere Spannung zum Beibehalten der aktivierten Stellung (der Haltestrom) als Betriebsstrom am Ventil angelegt sein. Alternativ zu dem Aktivierungsstrom und dem Haltestrom können im Rahmen der Erfindung auch eine Aktivierungsspannung und eine Haltespannung festgelegt sein. Spannung und Strom sind über das Ohmsche Gesetz miteinander verknüpft, so dass der Strom jeweils annähernd proportional zur zugeordneten Spannung ist. Gegebenfalls kann über eine Regelung eine Anpassung von Strom und/oder Spannung erfolgen, so dass jeweils eine gewünschte Spannung oder ein gewünschter Strom vorliegt.

Zum Aufbau der entsprechend ausgebildeten Vorrichtung wird auf die Einleitung sowie die nachfolgenden Erläuterungen verwiesen. Es sei angemerkt, dass die Hinlaufleitung einen Transport von (flüssigem) Reduktionsmittel weg vom Tank (hin zu einem Zwischenspeicher, einem Injektor, einem Filter, einer Dosiereinheit, einem Verdampfer, einer Reaktionskammer, einer Mischkammer, etc.) und die Rücklaufleitung, ausgehend von einer (einzelnen) Stelle der Hinlaufleitung, wieder zurück hin zum Tank ermöglichen.

Zum elektrischen Betrieb des Ventils ist eine entsprechende Spannungs- bzw. Stromquelle vorhanden sowie eine Steuerung, die einen entsprechenden Betrieb des Ventils veranlasst. Auch wenn in den meisten Fällen ein einzelnes Ventil bzw. eine einzelne Rücklaufleitung ausreichend ist, kann die Erfindung auch bei einer Mehrzahl von Ventilen und/oder Rücklaufleitungen entsprechend eingesetzt werden.

Besonders vorteilhaft ist das Verfahren zum Betrieb der Fördereinheit, wenn das Ventil einen beweglichen Anker aufweist, der durch den Aktivierungsstrom aus einer Ausgangsstellung in eine aktivierte Stellung bewegbar ist und durch den Haltestrom in der aktivierten Stellung gehalten werden kann. Wenn eine elektrische Spannung am Ventil angelegt wird, fließt durch die in dem Ventil vorgesehene Erregerspule ein elektrischer Strom. Eine Erregerspule des Ventils erzeugt so eine magnetische Kraft, die auf den Anker in dem Ventil wirkt. Der Anker kann so bewegt werden. Der bewegliche Anker kann insbesondere ein Kolben oder eine Membran sein. Auch ist möglich, dass sowohl ein Kolben als auch eine Membran vorgesehen sind, und eine Kraft und eine Bewegung von dem Kolben auf die Membran mit Hilfe eines Übertragungsfluids übertragen wird. Folglich wird hier insbesondere vorgeschlagen, über den Aktivierungsstrom die Erregerspule so anzusteuern, dass der Anker einen Positionswechsel durchführt und danach mittels des Haltestromes in der gewünschten aktivierten Stellung ortsfest gehalten wird.

Darüber hinaus wird auch vorgeschlagen, dass das Ventil einen beweglichen Anker, eine Feder und eine Erregerspule aufweist, und die Erregerspule den beweglichen Anker entgegen einer Federkraft der Feder bewegen kann. So ist hier zusätzlich ein rückwirkendes Element vorgesehen, welches der durch die Erregerspule erzeugten Kraft entgegenwirkt und den Anker des Ventils zurück in die Ausgangsstellung bewegt. Dieses rückwirkende Element kann beispielsweise eine Feder sein. Wenn keine oder eine zu geringe Betriebspannung an dem Ventil anliegt, bewegt das rückwirkende Element den Anker zurück in die Ausgangsstellung. Durch die Erregerspule und das beschriebene rückwirkende Element gemeinsam lässt sich der Anker des Ventils somit zwischen der Ausgangsstellung und der aktivierten Stellung hin und her bewegen.

Durch den Anker wird normalerweise ein Kanal für ein Medium freigegeben oder verschlossen. Wenn der Kanal freigegeben ist, ist das Ventil geöffnet. Wenn der Kanal verschlossen ist, ist das Ventil verschlossen.

Es ist erwünscht, dass der Aktivierungsstrom möglichst niedrig ist und für ein möglichst kurzes erstes Zeitintervall angelegt werden muss, um den Anker des Ventils aus der Ausgangsstellung in die aktivierte Stellung zu bewegen. Darüber hinaus sollte der Haltestrom zum Erhalt der aktivierten Stellung möglichst niedrig sein. So kann die Energieaufnahme des Ventils gering gehalten werden.

Als ein Beispiel für das erfindungsgemäße Verfahren wird hier ein Beispiel für den Ablauf des Verfahrens angeführt:
Als Ventil kann ein ansteuerbares Magnetventil verwendet werden. In Schritt a) kann an dieses Ventil beispielsweise ein Aktivierungsstrom von zwischen 400 mA [Milliampere] und 1000 mA, vorzugsweise ca. 700 mA angelegt werden. Dieser Aktivierungsstrom wird in Schritt a) für ein erstes Zeitintervall von zwischen 0,5 s [Sekunden] und 2 s, vorzugsweise ca. 1 s angelegt. Anschließend wird in Schritt b) ein Haltestrom von zwischen 20 mA [Milliampere] und 500 mA, vorzugsweise zwischen 200 mA und 300 mA angelegt. Gegebenenfalls wird nun innerhalb von Schritt b) der Haltestrom variiert. Beispielsweise wird der Haltestrom nach Art einer Iteration (insbesondere schrittweise bzw. wiederholt) kontinuierlich (ggf. stufenweise) reduziert. Dies kann beispielsweise in Schritten von jeweils 2 mA [Milliampere] bis 20 mA geschehen. Gleichzeitig kann in Schritt c) überwacht werden, ob eine Leckage des Ventils auftritt. Wenn eine Leckage des Ventils auftritt, wird ein minimal notwendiger Haltestrom zur Vermeidung einer Leckage in Schritt d) festgelegt. Dieser kann um eine vorgegebene Differenz von beispielsweise zwischen 10 mA [Milliampere] und 50 mA oberhalb des festgelegten Haltestromes liegen. Anschließend wird das erfindungsgemäße Verfahren erneut gestartet.

Durch das erfindungsgemäße Verfahren können der Aktivierungsstrom, der Haltestrom und/oder das erste Zeitintervall an relevante Betriebsgrößen der Fördereinheit angepasst werden. Es ist möglich, den Aktivierungsstrom, das erste Zeitintervall und/oder den Haltestrom so zu variieren, dass relevante Betriebsgrößen der Fördereinheit in einem akzeptablen Bereich liegen, so dass ein fehlerfreier Betrieb der Fördereinheit gewährleistet ist und gleichzeitig ein möglichst geringer Energieverbrauch des Ventils auftritt.

Besonders vorteilhaft ist das erfindungsgemäße Verfahren, wenn Schritt c) zumindest in Abhängigkeit einer ermittelten Betriebsgröße der Fördereinheit erfolgt, wobei die Betriebsgröße zumindest einen der folgenden Parameter umfasst:
- Druck des Reduktionsmittels in der Fördereinheit;
- Förderleistung einer der Fördereinheit zugeordneten Förderpumpe;
- charakteristischer Stromverlauf einer der Fördereinheit zugeordneten Förderpumpe;
- Leckage aus der Fördereinheit hinaus;
- Temperatur des Reduktionsmittels in der Fördereinheit;
- Temperatur eines Bauteils der Fördereinheit.

Mit dieser Verbesserung des Verfahrens wird insbesondere erreicht, dass eine Überwachung oder sogar Diagnose zumindest eines Teils dieser Betriebsgrößen der Fördereinheit erfolgt, und der Betrieb der Fördereinheit gezielt mittels des Betriebes des Ventils (unmittelbar und/oder nahezu zeitgleich und/oder geregelt) beeinflusst werden kann.

Wenn der Haltestrom, der Aktivierungsstrom und/oder das erste Zeitintervall für die aktuell bzw. tatsächlich vorliegenden Bedingungen zu gering sind, ist kein ausreichender Druckaufbau in der Fördereinheit möglich, weil durch Rücklaufleitung parallel zum Druckaufbau durch die Pumpe ein Druckverlust auftritt. Deshalb ist es vorteilhaft, den Haltestrom, den Aktivierungsstrom und/oder das erste Zeitintervall an den Druck in der Fördereinheit anzupassen.

Die Förderleistung bzw. das Fördervolumen der Fördereinheit ist regelmäßig erhöht, wenn der Haltestrom, der Aktivierungsstrom und/oder das erste Zeitintervall zu gering sind, weil ein Verlust an Förderleistung durch die Rücklaufleitung auftritt. Deshalb ist es vorteilhaft, den Aktivierungsstrom, den Haltestrom und/oder das erste Zeitintervall zu erhöhen, wenn die tatsächliche Förderleistung aktuell gegenüber einer erwarteten und/oder vorgegebenen Förderleistung erhöht ist. Wenn das erste Zeitintervall zu kurz und/oder der Aktivierungsstrom zu niedrig ist, wird der Umschaltvorgang des Ventils in den aktivierten Zustand möglicherweise nicht vollständig durchgeführt. Wenn der Haltestrom zu niedrig ist, wird das Ventil nach der Aktivierung nicht in dem umgeschalteten Zustand gehalten.

Über den charakteristischen Stromverlauf einer der Fördereinheit zugeordneten Förderpumpe kann auf den Druckaufbau und/oder die Förderleistung der Förderpumpe geschlossen werden. Deshalb ist es auch möglich den Aktivierungsstrom, den Haltestrom und/oder das erste Zeitintervall direkt an den charakteristischen Stromverlauf einer derartigen Förderpumpe anzupassen. Eine derartige Förderpumpe kann eine Hubkolbenpumpe oder eine Membranpumpe mit einer Pumpenkammer und einem beweglichen Pumpkolben sein. Dieser Kolben wird durch eine elektromagnetische Spule hin- und her bewegt. Der charakteristische Stromverlauf einer Förderpumpe stellt sich ein, wenn an der Förderpumpe ein vorbestimmtes Spannungssignal angelegt wird. Dieses Spannungssignal kann ein rechteckiges Spannungssignal sein. Alternativ kann dieses Spannungssignal wie das Spannungssignal für das erfindungsgemäße Verfahren in mehrere zeitliche Phasen unterschiedlicher Spannung unterteilt sein. Es kann beispielsweise eine Beschleunigungsspannung zur Beschleunigung des Pumpenkolbens und eine (verschiedene) Bewegungsspannung zur Bewegung des Pumpenkolbens vorgesehen sein. Aus dem charakteristischen Stromverlauf kann über die Bewegung des Pumpenkolbens und den Widerstand des Mediums in der Pumpe auf die Förderleistung der Pumpe und den Druckaufbau in der Fördereinheit rückgeschlossen werden.

Sowohl der Druckaufbau in der Fördereinheit als auch die Förderleistung der Pumpe hängen gegebenenfalls auch mit einer (gewollten oder unerwünschten) Leckage aus der Fördereinheit (einschließlich der zugeordneten Leitungen) hinaus zusammen. Die Leckage ist die Ursache für eine erhöhte Förderleistung der Förderpumpe ohne einen entsprechend erhöhten Transport zum gewünschten Ziel und einen verschlechterten Druckaufbau. Eine mögliche Position für eine Leckage ist ein nicht vollständig verschlossenes Ventil in der Rücklaufleitung. Ein nicht vollständig verschlossenes Ventil kann durch einen zu geringen Haltestrom, einen zu geringen Aktivierungsstrom und/oder ein zu kurzes erstes Zeitintervall bedingt sein. Deshalb ist es sinnvoll, den Haltestrom, den Aktivierungsstrom und/oder das erste Zeitintervall an eine Leckage der Fördereinheit und insbesondere an eine Leckage am Ventil in der Rücklaufleitung anzupassen.

Wenn eine Leckage festgestellt wurde, sollte das erfindungsgemäße Verfahren erneut gestartet werden, damit insbesondere Schritt a) des Verfahrens erneut durchgeführt wird. Bei Auftreten einer Leckage ist das Ventil nicht vollständig umgeschaltet. Der zu niedrig festgelegte Haltestrom ist jedoch nicht in der Lage, das Ventil in den vollständig umgeschalteten Zustand zu überführen. Aus diesem Grund sollte der Aktivierungsstrom in Schritt a) erneut angelegt werden, der ein vollständiges Umschalten des Ventils sicherstellt.

Auch ist es ratsam, den Aktivierungsstrom, den Haltestrom und/oder das erste Zeitintervall an eine im Reduktionsmittel und/oder an einem Bauteil der Fördereinheit gemessenen Temperatur anzupassen. Die elektrischen Eigenschaften und insbesondere der elektrische Widerstand eines Ventils können von der Temperatur abhängen, so dass es besonders vorteilhaft ist, den Aktivierungsstrom, den Haltestrom und/oder das erste Zeitintervall an eine Temperatur des Ventils oder eines in der Nähe des Ventils angeordneten Bauteils anzupassen. Auch ist die Viskosität des Reduktionsmittels zumindest teilweise von der Temperatur des Reduktionsmittels abhängig. Aufgrund einer veränderten Viskosität des Reduktionsmittels können sich veränderte notwendige Halteströme, Aktivierungsströme oder erste Zeitintervalle einstellen. Beispielsweise kann eine erhöhte Viskosität die Bewegung des Ventils erschweren. Deshalb ist es vorteilhaft, den Aktivierungsstrom, das erste Zeitintervall und/oder den Haltestrom an die Temperatur des Reduktionsmittels anzupassen.

Gemäß einer weiteren vorteilhaften Ausgestaltung wird das Verfahren wiederholt durchgeführt, und es erfolgt eine Adaption zumindest einer der folgenden Größen an eine alterungsbedingte Veränderung des Ventils:
- den Aktivierungsstrom;
- den Haltestrom;
- das erste Zeitintervall.

Auch wenn diese Adaption im Rahmen des Schrittes c) mit ausgeführt werden könnte, ist hier jedoch bevorzugt, dass die Adaption nicht bei jedem Betrieb des Ventils sondern nur zu vorgegebenen Zeitpunkten durchgeführt wird. Solche Zeitpunkte können eine erstmalige Inbetriebnahme, Wartungszeitpunkte, Kilometerstandgrenzen, etc. sein.

Durch eine altersbedingte Veränderung des Ventils kann beispielsweise die Auswirkung des Ventils auf die Förderrate der Fördereinheit und/oder einen Leckagestrom durch das Ventil vergrößert werden. Beispielsweise können sich der Anker des Ventils und/oder die Anlagefläche des Ventils für den Anker durch den Betrieb verändern, so dass sich ein Leckagestrom durch das Ventil hindurch einstellt. Es ist jedoch möglich, dass ein derartiger Verschleiß des Ventils durch einen erhöhten Haltestrom zumindest teilweise ausgeglichen werden kann, so dass ein Leckagestrom vermieden wird oder zumindest soweit reduziert wird, dass ein fehlerfreier Betrieb der Fördereinheit trotzdem gewährleistet werden kann. Auch möglich ist, dass die durch ein rückstellendes Element des Ventils ausgeübte Kraft sich über die Zeit verändert. Das rückstellende Element kann beispielsweise eine Feder sein, die altert und irgendwann eine geringere Federkraft ausübt. Es ist nun möglich den Aktivierungsstrom, das erste Zeitintervall und/oder den Haltestrom zu reduzieren, und trotzdem einen fehlerfreien Betrieb der Fördereinheit zu gewährleisten.

Ebenfalls wird als vorteilhaft angesehen, wenn das Verfahren bei einer ersten Inbetriebnahme der Fördereinheit durchgeführt wird und eine Adaption zumindest einer der folgenden Größen an durch Fertigungstoleranzen vorliegende individuelle Eigenschaften des Ventils erfolgt:
- der Aktivierungsstrom;
- der Haltestrom;
- das erste Zeitintervall.

Ventile aus einer Herstellungsserie sind regelmäßig unterschiedlich, weil eine absolut exakte Fertigung vielfach nicht möglich ist. Es ist möglich diese Schwankungen in der Fertigungsqualität zu nutzen, um den Energieverbrauch für eine Fördereinheit weiter zu reduzieren. Es kann auftreten, dass zum Halten des Ventils in der aktivierten Stellung bei verschiedenen Ventilen desselben Typs bzw. derselben Baureihe unterschiedliche Halteströme erforderlich sind. Auch möglich ist, dass die Aktivierungsströme unterschiedlich sind. Dies kann beispielsweise daran liegen, dass die Federkraft einer Feder, die den Anker des Ventils zurück in die Ausgangsstellung drückt oder zieht, unterschiedlich stark sein kann. Insoweit wird hier vorgeschlagen, tatsächlich die individuellen Eigenschaften des Ventils zu ermitteln und konkret mit diesem einzelnen Ventil Vorgaben zur Anpassung der Betriebsgrößen vorzugeben.

Bezüglich der Veränderung der Fördereinheit durch Alterung und bezüglich der Fertigungstoleranzen erfolgt die Adaption im Rahmen des erfindungsgemäßen Verfahrens vorzugsweise selbstanpassend. Das heißt, dass im Rahmen der Adaption keine individuelle Einrichtung oder Programmierung verschiedener Fördereinheiten aus einer Fertigungslinie grammierung verschiedener Fördereinheiten aus einer Fertigungslinie erfolgt, sondern die Adaption im Wesentlichen automatisch durchgeführt wird. Insbesondere werden Abweichungen der Fördereinheiten innerhalb der Fertigungstoleranzen während der Herstellung nicht überwacht. Die Adaption an Unterschiede der Fördereinheiten innerhalb der Fertigungstoleranzen erfolgt selbstanpassend bzw. automatisch, ohne dass eine derartige Überwachung erfolgt. Veränderungen aufgrund der Alterung sind meistens gar nicht feststellbar, weil die Alterung der Fördereinheit während des Betriebs auftritt und eine erneute Vermessung der Fördereinheit während des Betriebs normalerweise nicht erfolgt. Von daher ist es insbesondere für eine Adaption aufgrund von Alterung sogar erforderlich, dass diese Adaption selbstanpassend bzw. automatisch abläuft.

Erfindungsgemäß wird in Schritt b) der Haltestrom so weit reduziert, dass in Schritt c) eine Leckage aus der Fördereinheit hinaus detektiert wird, und dann in Schritt d) der Haltestrom um ein vorgegebenes Intervall oberhalb des in Schritt b) reduzierten Haltestromes festgelegt. Das vorgegebene Intervall (insbesondere ein Intervall der Spannungserhöhung) sollte so gewählt sein, dass die in Schritt d) festgelegte Haltestrom mit ausreichender Sicherheit gewährleistet, dass danach keine Leckage aus der Fördereinheit hinaus mehr auftritt. Auf diese Art und Weise ist es möglich, den zum Halten der aktivierten Stellung des Ventils notwendigen Energiebedarf des Ventils besonders stark zu reduzieren.

In einer weiteren vorteilhaften Ausgestaltung des Verfahrens wird in Schritt a) ein Aktivierungsstrom am Ventil angelegt und es wird in Schritt c) über einen der relevanten Betriebsparameter überprüft, ob dieser Aktivierungsstrom ausreichend war, um das Ventil zu betätigen. Beispielsweise kann überprüft werden, ob ein Leckagestrom durch das Ventil hindurch auftritt. In Schritt d) wird dann der Aktivierungsstrom nun entsprechend angepasst. Wenn das Ventil wie gewünscht betätigt wurde, wird der Aktivierungsstrom weiter reduziert. Wenn der Aktivierungsstrom zu gering war um das Ventil zu betätigen, wird der Aktivierungsstrom wieder um ein vorgegebenes geeignetes Intervall erhöht, so dass ein erfolgreiches Aktivieren des Ventils mit ausreichender Sicherheit gewährleistet ist. Dieses Verfahren lässt sich auch auf die Dauer des ersten Zeitintervalls anwenden, wobei das erste Zeitintervall durch eine entsprechende Verfahrensführung besonders kurz gewählt werden kann.

Weiterhin besonders vorteilhaft ist das Verfahren, wenn der Aktivierungsstrom und der Haltestrom mit Hilfe einer Pulsweitenmanipulation aus einer Systemspannung generiert werden. Im Bordnetz eines Kraftfahrzeugs steht normalerweise eine um einige Volt schwankende Spannung zur Verfügung, die sich beispielsweise aus der Leistung eines an die Verbrennungskraftmaschine angeschlossenen Generators und einer zur Speicherung von elektrischer Energie vorgesehenen Batterie ergibt. Zur erfindungsgemäßen Ansteuerung eines Ventils in der Fördereinheit ist jedoch der Betrieb mit sehr exakten Vorgaben zur jeweiligen Betriebsspannung bevorzugt. Eine exakte Spannung, die kleiner als eine Ausgangsspannung ist, kann beispielsweise mit Hilfe der Pulsweitenmanipulation erzeugt werden. Mit Hilfe der Pulsweitenmanipulation können mit einer einzigen elektrischen Schaltung auch unterschiedliche Spannungen generiert werden. Für das erfindungsgemäße Verfahren sind zwei verschiedene Betriebsspannungen, der Aktivierungsstrom und der Haltestrom notwendig. Daher eignet sich die Pulsweitenmodulation besonders gut für das hier vorgeschlagenen Verfahren.

Nach einer vorteilhaften Weiterbildung des Verfahrens wird vorgeschlagen, dass eine Freilaufdiode parallel zu dem ansteuerbaren Ventil geschaltet ist und nach Schritt d) eine Deaktivierung des Haltestromes erfolgt. Bei der Deaktivierung eines Ventils (insbesondere eines magnetisch betriebenen Ventils) fließt nach der Deaktivierung die in dem Ventil (bzw. in dem Magneten des Ventils) gespeicherte elektrische Energie zurück und erzeugt eine kurze Spannungsspitze, die zu einer Schädigung elektronischer Bauteile führen kann. Durch die Parallelschaltung des Ventils mit einer Freilaufdiode bzw. einer Schutzdiode kann diese Spannungsspitze erfolgreich vermieden werden. Insbesondere, wenn das erfindungsgemäße Verfahren häufig und schnell mehrmals hintereinander ausgeführt wird, können so störende Einflüsse vorangegangener Verfahrenszyklen (die Schritte a) bis d)) wirksam vermieden werden.

Die Erfindung wird bevorzugt in einem Kraftfahrzeug verwirklicht. Folglich wird hier auch ein Kraftfahrzeug, aufweisend eine Verbrennungskraftmaschine und eine Abgasanlage zur Reinigung der Abgase der Verbrennungskraftmaschine, vorgeschlagen, wobei das Kraftfahrzeug eine Fördereinheit mit einer von einem Tank zu einer Zugabestelle verlaufenden Hinlaufleitung und einer von der Hinlaufleitung abzweigenden Rücklaufleitung aufweist, wobei die Rücklaufleitung von einem mit einer elektrischen Spannung ansteuerbaren Ventil verschlossen werden kann, und das Kraftfahrzeug eine Steuerung aufweist, die zum Betrieb der Fördereinheit nach einem erfindungsgemäßen Verfahren eingerichtet ist.

Die Steuerung kann auch mit in die Motorsteuerung des Kraftfahrzeuges integriert sein, so dass kein eigenständiges Bauteil für die Steuerung der Fördereinheit vorgesehen sein muss. Das Verfahren kann zum Beispiel als Software in die Steuerung integriert sein. Die Steuerung kann zudem mit geeigneten (berechneten und/oder gespeicherten) Datenmodellen, Sensoren, etc. zusammenwirken, um eine aktuelle Anpassung bzw. Adaption des Betriebes des Ventils vorzunehmen.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine für das erfindungsgemäße Verfahren eingerichtete Fördereinheit,
- Fig. 2:: ein Ventil, das in einer Fördereinheit angeordnet sein kann, mit der das erfindungsgemäße Verfahren durchführbar ist,
- Fig. 3:: eine weitere Abbildung des Ventils aus Fig. 2,
- Fig. 4:: einen durch Pulsweitenmodulation erzeugten Spannungsverlauf,
- Fig. 5:: ein Flussdiagramm des erfindungsgemäßen Verfahrens, und
- Fig. 6:: ein Kraftfahrzeug, aufweisend eine Fördereinheit.

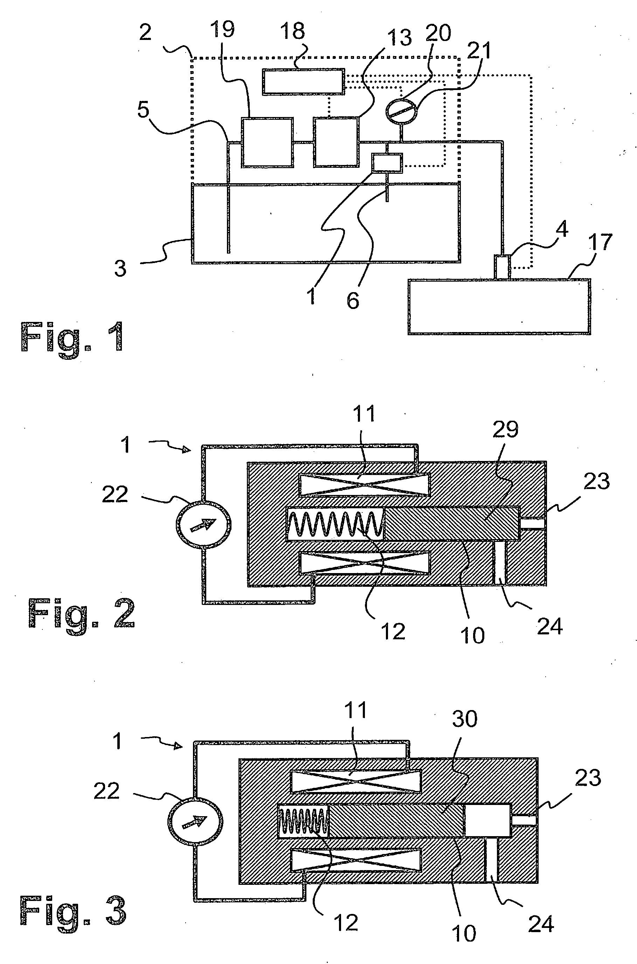

In Fig. 1 ist eine Fördereinheit 2 (beziehungsweise eine komplette Dosiereinheit mit einem Injektor hin zur Abgasanlage 17) für ein flüssiges Reduktionsmittel, wie z. B. eine Harnstoff-Wasser-Lösung, gezeigt. Die Fördereinheit 2 fördert Reduktionsmittel aus einem Tank 3 zu einer Zugabestelle 4. Das Reduktionsmittel wird von dem Tank 3 zur Zugabestelle 4 durch eine Hinlaufleitung 5 gefördert. In der Hinlaufleitung 5 sind in Strömungsrichtung des Reduktionsmittels ein Filter 19 und eine Förderpumpe 13 angeordnet. Ausgehend vom Tank 3 betrachtet hinter dem Filter 19 und der Förderpumpe 13 zweigt von der Hinlaufleitung 5 eine einzelne Rücklaufleitung 6 ab. Die Rücklaufleitung 6 ist mit Hilfe eines elektrisch betreibbaren Ventils 1 verschließbar. In der Hinlaufleitung 5 zwischen der Förderpumpe 13 und der Zugabestelle 4 befindet sich ein Drucksensor 20 und ein Temperatursensor 21. Der Drucksensor 20 und der Temperatursensor 21 können entweder getrennt voneinander oder in einer gemeinsamen Baueinheit realisiert sein. Die Zugabestelle 4 ist dazu eingerichtet, Reduktionsmittel in einer vorgegebenen ggf. veränderlichen Menge in eine Abgasanlage 17 zuzudosieren. Das erfindungsgemäße Verfahren wird von einer Steuerung 18 durchgeführt. Diese ist an die Förderpumpe 13, den Drucksensor 20, den Temperatursensor 21 und die Zugabestelle 4 angeschlossen, um von diesen Komponenten generierte Informationen bzw. Signale zu verarbeiten und hieraus den Aktivierungsstrom, den Haltestrom und das erste Zeitintervall für das ebenfalls an die Steuerung 18 angeschlossene Ventil 1 festzulegen.

Die Fig. 2 und die Fig. 3 zeigen ein Beispiel für ein Ventil 1, das für das erfindungsgemäße Verfahren in einer Fördereinheit eingesetzt werden kann. In Fig. 2 ist das Ventil 1 in einer Ausgangsstellung 29 dargestellt, in Fig. 3 ist das Ventil 1 in einer aktivierten Stellung 30 dargestellt. In der Ausgangsstellung 29 ist eine Verbindung von einem Eingangskanal 23 in das Ventil 1 hinein zu einem Ausgangskanal 24 aus dem Ventil 1 hinaus verschlossen. Das Reduktionsmittel kann nicht von Eingangskanal 23 durch das Ventil 1 zum Ausgangskanal 24 fließen. In der aktivierten Stellung 30 ist die Verbindung von einem Eingangskanal 23 in das Ventil 1 hinein zu einem Ausgangskanal 24 aus dem Ventil 1 hinaus geöffnet. Das Reduktionsmittel kann nun vom Eingangskanal 23 durch das Ventil 1 zum Ausgangskanal 24 fließen. Ein beweglicher Anker 10 schließt bzw. öffnet jeweils die Verbindung von dem Eingangskanal 23 zu dem Ausgangskanal 24. Der Anker 10 wird über eine Feder 12 in der Ausgangsstellung 29 gehalten. Durch eine Erregerspule 11 kann der Anker 10 entgegen der von der Feder 12 ausgeübten Kraft bewegt werden, so dass das Ventil 1 in die aktivierte Stellung 30 überführt werden kann. Die Erregerspule 11 wird von einer Spannungsquelle 22 mit elektrischer Energie versorgt.

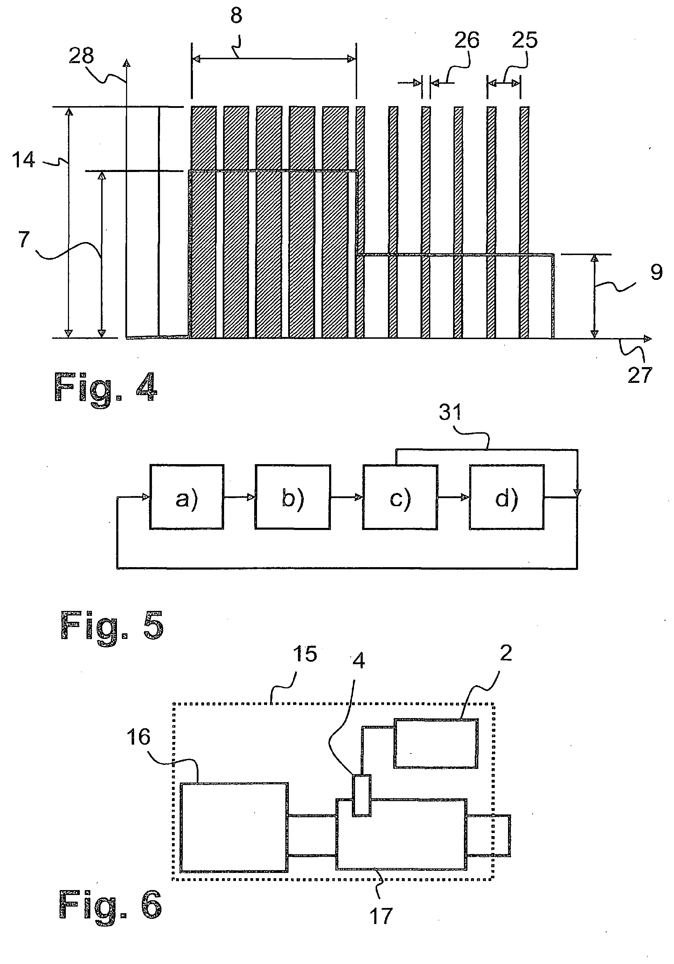

Fig. 4 erläutert schematisch, wie aus einer vorliegenden Systemspannung 14 mit Hilfe der Pulsweitenmanipulation eine Aktivierungsspannung 7 und/oder eine Haltespannung 9 generiert werden können. Aufgrund des elektrischen Widerstandes des Ventils sowie der sonstigen angeschlossenen Komponenten ergeben sich gemäß dem Ohmschen Gesetz aus der Haltespannung 9 der Haltestrom und aus der Aktivierungsspannung 7 der Aktivierungsstrom. Gegebenenfalls kann eine regelungstechnische Anpassung der Aktivierungsspannung 7 und der Haltespannung 9 erfolgen, bei der die Aktivierungsspannung 7 und der Haltespannung 9 so angepasst werden, dass der gewünschte Aktivierungsstrom und der gewünschte Haltestrom exakt eingestellt sind. Der zeitliche Spannungsverlauf ist in Fig. 4 über der Zeitachse 27 auf der Spannungsachse 28 aufgetragen. Im Rahmen der Pulsweitenmodulation ist eine feste Pulsweite 25 vorgegeben, innerhalb derer die Systemspannung 14 mit einer variablen Pulslänge 26 gepulst wird. Diese gepulste Systemspannung 14 wird auf eine für die Pulweisenmodulation eingerichtete elektrische Schaltung aufgebracht. Eine schwankende Systemspannung 14 kann durch eine Anpassung der Pulslänge 26 ausgeglichen werden. Am Ausgang dieser Schaltung ergibt sich in Abhängigkeit der vorgegebenen Pulslänge 26 eine entsprechend reduzierte Spannung. Im Falle des hier behandelten erfindungsgemäßen Verfahrens ist diese Spannung entweder die Aktivierungsspannung 7 oder die niedrigere Haltespannung 9. Für das erfindungsgemäße Verfahren wird die Aktivierungsspannung 7 für ein erstes Zeitintervall 8 erzeugt. Ab dann wird die Pulslänge 26 reduziert und es wird die Haltespannung 9 erzeugt.

Fig. 5 zeigt ein Flussdiagramm einer bevorzugten Variante des erfindungsgemäßen Verfahrens. Die einzelnen Verfahrensschritte a), b), c) und d) laufen in Form einer Schleife wiederholt ab. Insbesondere bei einer Verfahrensführung des erfindungsgemäßen Verfahrens, bei dem der Aktivierungsstrom, der Haltestrom und das erste Zeitintervall möglichst weit reduziert werden, ist zum Abschluss des erfindungsgemäßen Verfahrens jeweils ein Kontrolldurchlauf 31 möglich. Im Rahmen dieses Kontrolldurchlaufs 31 erfolgt keine weitere Anpassung des Aktivierungsstromes, des Haltestromes und des ersten Zeitintervalls, sondern es wird lediglich überprüft, ob die Betriebsparameter der Fördereinheit mit dem vorliegenden Aktivierungsstrom, dem vorliegenden Haltestrom und dem vorliegenden ersten Zeitintervall im gewünschten Bereich liegen. Schritt d) entfällt dementsprechend in diesem abschließenden Kontrolldurchlauf.

In Fig. 6 ist ein Kraftfahrzeug 15, aufweisend eine Verbrennungskraftmaschine 16 und eine Abgasanlage 17 dargestellt. Der Abgasanlage 17 kann über eine Zugabestelle 4 Reduktionsmittel aus deiner Fördereinheit 2 zugeführt werden. Die Fördereinheit 2 ist eine Fördereinheit, die mit dem erfindungsgemäßen Verfahren betrieben werden kann.

Grundsätzlich sei darauf hingewiesen, dass das Verfahren entsprechend auch bei anderen Additiven für Kraftfahrzeuge eingesetzt werden kann, die mittels einer entsprechenden Fördereinheit mit Hinlaufleitung und Rücklaufleitung, die durch ein elektrisch betreibbares Ventil verbindbar sind. Solche (fluiden) Additive umfassen insbesondere Kraftstoff, Oxidationsmittel und dergleichen. Die Zugabestelle kann hierfür an für die Additive geeignete Zugabestellen verlegt werden, wie z. B. einen Ansaugbereich der Verbrennungskraftmaschine oder gezielt stromauf/stomab einer Abgasbehandlungseinheit (Filter, Katalysator, Mischer, etc.).

### Bezugszeichenliste

- 1: Ventil
- 2: Fördereinheit
- 3: Tank
- 4: Zugabestelle
- 5: Hinlaufleitung
- 6: Rücklaufleitung
- 7: Aktivierungsspannung
- 8: erstes Zeitintervall
- 9: Haltespannung
- 10: Anker
- 11: Erregerspule
- 12: Feder
- 13: Förderpumpe
- 14: Systemspannung
- 15: Kraftfahrzeug
- 16: Verbrennungskraftmaschine
- 17: Abgasanlage
- 18: Steuerung
- 19: Filter
- 20: Drucksensor
- 21: Temperatursensor
- 22: Spannungsquelle
- 23: Eingangskanal
- 24: Ausgangskanal
- 25: Pulsweite
- 26: Pulslänge
- 27: Zeitachse
- 28: Spannungsachse
- 29: Ausgangsstellung
- 30: aktivierte Stellung
- 31: Kontrolldurchlauf

## Patentansprüche

1. Verfahren zum Betrieb einer Fördereinheit (2) für Reduktionsmittel, wobei die Fördereinheit (2) eine von einem Tank (3) zu einer Zugabestelle (4) verlaufende Hinlaufleitung (5) und eine von der Hinlaufleitung (5) abzweigende Rücklaufleitung (6) aufweist, wobei die Rücklaufleitung (6) von einem mit einem elektrischen Strom ansteuerbaren Ventil (1) umgeschaltet werden kann, und das Verfahren zumindest die folgenden Schritte aufweist:
a) Anlegen eines Aktivierungsstromes am Ventil (1) für ein erstes Zeitintervall (8);
b) Anlegen eines Haltestromes am Ventil (1), wenn das erste Zeitintervall (8) abgelaufen ist;
c) Ermitteln einer Betriebsgröße der Fördereinheit (2);
d) Anpassen zumindest einer der folgenden Größen in Abhängigkeit der ermittelten Betriebsgröße:
- der Aktivierungsstrom;
- der Haltestrom;
- das erste Zeitintervall (8),
**dadurch gekennzeichnet, dass**
- in Schritt b) der Haltestrom so weit reduziert wird, dass in Schritt c) eine Leckage aus der Fördereinheit (2) hinaus detektiert wird, und
- dann in-Schritt d) der Haltestrom um ein vorgegebenes Intervall oberhalb des in Schritt b) reduzierten Haltestromes festgelegt wird.

2. Verfahren nach Patentanspruch 1, wobei das Ventil (1) einen beweglichen Anker (10) aufweist, der durch den Aktivierungsstrom (7) aus einer Ausgangsstellung (29) in eine aktivierte Stellung (30) bewegbar ist und durch den Haltestrom in der aktivierten Stellung (30) gehalten werden kann.

3. Verfahren nach Patentanspruch 1, wobei das Ventil (1) einen beweglichen Anker (10), eine Feder (12) und eine Erregerspule (11) aufweist und die Erregerspule (11) den beweglichen Anker (10) entgegen einer Federkraft der Feder (12) bewegen kann.

4. Verfahren nach einem der vorhergehenden Patentansprüche, wobei Schritt c) zumindest in Abhängigkeit einer ermittelten Betriebsgröße der Fördereinheit (2) erfolgt, wobei die Betriebsgröße zumindest einen der folgenden Parameter umfasst:
- Druck des Reduktionsmittels in der Fördereinheit (2);
- Förderleistung einer der Fördereinheit (2) zugeordneten Förderpumpe (13);
- charakteristischer Stromverlauf einer der Fördereinheit (2) zugeordneten Förderpumpe (13);
- Leckage aus der Fördereinheit (2) hinaus;
- Temperatur des Reduktionsmittels in der Fördereinheit (2);
- Temperatur eines Bauteils der Fördereinheit (2).

5. Verfahren nach einem der vorhergehenden Patentansprüche, wobei das Verfahren wiederholt durchgeführt wird, und eine Adaption zumindest einer der folgenden Größen an eine alterungsbedingte Veränderung des Ventils (1) erfolgt:
- der Aktivierungsstrom;
- der Haltestrom;
- das erste Zeitintervall (8).

6. Verfahren nach einem der vorhergehenden Patentansprüche, wobei das Verfahren bei einer ersten Inbetriebnahme der Fördereinheit (2) durchgeführt wird, und eine Adaption zumindest einer der folgenden Größen an durch Fertigungstoleranzen vorliegende individuelle Eigenschaften des Ventils (1) erfolgt:
- der Aktivierungsstrom;
- der Haltestrom;
- das erste Zeitintervall (8).

7. Verfahren nach einem der vorhergehenden Patentansprüche, wobei der Aktivierungsstrom und der Haltestrom mit Hilfe einer Pulsweitenmanipulation aus einer Systemspannung (14) generiert werden.

8. Verfahren nach einem der vorhergehenden Patentansprüche, wobei eine Freilaufdiode parallel zu dem ansteuerbaren Ventil (1) geschaltet ist und nach Schritt d) eine Deaktivierung der Haltestromes erfolgt.

9. Kraftfahrzeug (15), aufweisend eine Verbrennungskraftmaschine (16) und eine Abgasanlage (17) zur Reinigung der Abgase der Verbrennungskraftmaschine (16), wobei das Kraftfahrzeug (15) eine Fördereinheit (2) mit einer von einem Tank (3) zu einer Zugabestelle (4) verlaufenden Hinlaufleitung (5) und einer von der Hinlaufleitung (5) abzweigenden Rücklaufleitung (6) aufweist, wobei die Rücklaufleitung (6) von einem mit einem elektrischen Strom ansteuerbaren Ventil (1) verschlossen werden kann und das Kraftfahrzeug (15) eine Steuerung (18) aufweist, die zum Betrieb der Fördereinheit (2) nach einem Verfahren gemäß einem der vorhergehenden Patentansprüche eingerichtet ist.

## Claims

1. Method for operating a delivery unit (2) for reducing agent, wherein the delivery unit (2) has a feed line (5), which runs from a tank (3) to a metering-in point (4), and a return line (6) which branches off from the feed line (5), wherein the return line (6) can be switched over by means of a valve (1) which can be activated with an electrical current, and the method comprises at least the following steps:
a) applying an activation current to the valve (1) for a first time interval (8);
b) applying a holding current to the valve (1) when the first time interval (8) has elapsed;
c) determining an operating variable of the delivery unit (2) ;
d) adapting at least one of the following variables as a function of the determined operating variable:
- the activation current;
- the holding current;
- the first time interval (8),
**characterized in that**
- in step b), the holding current is reduced to such an extent that leakage from the delivery unit (2) is detected in step c), and
- then in step d), the holding current is set so as to be higher by a predefined interval than the holding current which was reduced in step b).

2. Method according to Patent Claim 1, wherein the valve (1) has a movable armature (10) which can be moved from an initial position (29) into an activated position (30) by the activation current (7) and can be held in the activated position (30) by the holding current.

3. Method according to Patent Claim 1, wherein the valve (1) has a movable armature (10), a spring (12) and an exciter coil (11), and the exciter coil (11) can move the movable armature (10) counter to a spring force of the spring (12).

4. Method according to one of the preceding patent claims, wherein step c) takes place at least as a function of a determined operating variable of the delivery unit (2), wherein the operating variable comprises at least one of the following parameters:
- pressure of the reducing agent in the delivery unit (2);
- delivery rate of a delivery pump (13) assigned to the delivery unit (2);
- characteristic current profile of a delivery pump (13) assigned to the delivery unit (2);
- leakage from the delivery unit (2);
- temperature of the reducing agent in the delivery unit (2) ;
- temperature of a component in the delivery unit (2).

5. Method according to one of the preceding patent claims, wherein the method is carried out repeatedly and an adaptation of at least one of the following variables to an aging-induced change of the valve (1) is carried out:
- the activation current;
- the holding current;
- the first time interval (8).

6. Method according to one of the preceding patent claims, wherein the method is carried out upon a first start-up of the delivery unit (2), and an adaptation of at least one of the following variables to individual characteristics of the valve (1) resulting from production tolerances is carried out:
- the activation current;
- the holding current;
- the first time interval (8).

7. Method according to one of the preceding patent claims, wherein the activation current and the holding current are generated from a system voltage (14) by means of a pulse width manipulation.

8. Method according to one of the preceding patent claims, wherein a free-wheeling diode is connected in parallel with the activatable valve (1), and a deactivation of the holding current takes place after step d).

9. Motor vehicle (15) having an internal combustion engine (16) and an exhaust system (17) for the purification of the exhaust gases of the internal combustion engine (16), wherein the motor vehicle (15) has a delivery unit (2) with a feed line (5), which runs from a tank (3) to a metering-in point (4), and with a return line (6), which branches off from the feed line (5), wherein the return line (6) can be closed off by a valve (1) which can be activated with an electrical current, and the motor vehicle (15) has a controller (18) which is set up for operating the delivery unit (2) in accordance with a method according to one of the preceding patent claims.

## Revendications

1. Procédé pour faire fonctionner une unité (2) d'acheminement d'un agent réducteur, l'unité (2) d'acheminement ayant un conduit (5) d'aller allant d'un réservoir (3) à un point (4) d'addition et un conduit (6) de retour bifurquant du conduit (5) d'aller, le conduit (6) de retour pouvant être commuté par une vanne (1) pouvant être excitée par un courant électrique et le procédé ayant au moins les stades suivants :
a) application d'un courant d'activation à la vanne (1) pendant un premier intervalle (8) de temps ;
b) application d'un courant de maintien à la vanne (1), lorsque le premier intervalle (8) de temps s'est écoulé ;
c) détermination d'une grandeur de fonctionnement de l'unité (2) d'acheminement ;
d) adaptation d'au moins l'une des grandeurs suivantes en fonction de la grandeur de fonctionnement déterminée :
- le courant d'activation ;
- le courant de maintien ;
- le premier intervalle (8) de temps,
**caractérisé en ce que**
- au stade b), on réduit tellement le courant de maintien qu'au stade c), une fuite de l'unité (2) d'acheminement est détectée et
- ensuite, au stade d), on fixe le courant de maintien autour d'un intervalle donné à l'avance au-dessus du courant de maintien réduit au stade b).

2. Procédé suivant la revendication 1, dans lequel la vanne (1) a une armature (10) mobile, qui peut, par le courant (7) d'activation, passer d'une position (29) initiale à une position (30) activée et qui peut, par le courant de maintien, être maintenue dans la position (30) activée.

3. Procédé suivant la revendication 1, dans lequel la vanne (1) a une armature (10) mobile, un ressort (12) et une bobine (11) d'excitation et la bobine (11à) d'excitation peut déplacer l'armature (10) mobile à l'encontre de la force du ressort (12).

4. Procédé suivant l'une des revendications précédentes, dans lequel le stade c) s'effectue au moins en fonction d'une grandeur de fonctionnement déterminée de l'unité (2) d'acheminement, la grandeur de fonctionnement comprenant au moins l'un des paramètres suivants :
- pression de l'agent réducteur dans l'unité (2) d'acheminement ;
- débit de refoulement d'une pompe (23) de circulation associée à l'unité (2) d'acheminement ;
- courbe caractéristique du courant d'une pompe (13) de circulation associée à l'unité (2) d'acheminement ;
- fuite de l'unité (2) d'acheminement ;
- température de l'agent réducteur dans l'unité (2) d'acheminement ;
- température d'un élément de l'unité (2) d'acheminement.

5. Procédé suivant l'une des revendications précédentes, dans lequel on effectue le procédé de manière répétée et il s'effectue une adaptation d'au moins l'une des grandeurs suivantes à une modification de la vanne (1) due au vieillissement :
- le courant d'activation ;
- le courant de maintien ;
- le premier intervalle (8) de temps.

6. Procédé suivant l'une des revendications précédentes, dans lequel on effectue le procédé lors d'une première mise en service de l'unité (2) d'acheminement et il s'effectue une adaptation d'au moins l'une des grandeurs suivantes aux propriétés individuelles de la vanne (1) dues à des tolérances de fabrication :
- le courant d'activation ;
- le courant de maintien ;
- le premier intervalle (8) de temps.

7. Procédé suivant l'une des revendications précédentes, dans lequel on crée le courant d'activation et le courant de maintien à l'aide d'une manipulation en largeur d'impulsion d'une tension (14) de système.

8. Procédé suivant l'une des revendications précédentes, dans lequel une diode de roue libre est montée en parallèle à la vanne (1) qui peut être excitée et, après le stade d), il s'effectue une désactivation du courant de maintien.

9. Véhicule (15) automobile ayant un moteur (16) à combustion interne et une installation (17) de gaz d'échappement pour épurer les gaz d'échappement du moteur (16) à combustion interne, le véhicule (15) automobile ayant une unité (2) d'acheminement, comprenant un conduit (15) d'aller allant d'un réservoir (3) à un point (4) d'addition et un conduit (6) de retour bifurquant du conduit (5) d'aller, le conduit (6) de retour pouvant être fermé par une vanne (1) pouvant être excitée par un courant électrique, et le véhicule (15) automobile ayant une commande (18), qui est conçue pour le fonctionnement de l'unité (2) d'acheminement selon un procédé suivant l'une des revendications précédentes.
